# EUROPEAN PATENT SPECIFICATION

(11) **EP 2 814 732 B1**
(45) Date of publication and mention of the grant of the patent: **05.04.2017**
(21) Application number: 12868531.0
(22) Date of filing: 17.02.2012
(51) Int. Cl.: B64C 1/12, B29C 70/34, B29D 99/00, B64C 3/24

(54) **METHOD AND MOULD SYSTEM FOR NET MOULDING OF A CO-CURED, INTEGRATED STRUCTURE**
VERFAHREN UND FORMSYSTEM ZUR NETZFORMUNG EINER COGEHÄRTETEN, INTEGRIERTEN STRUKTUR
PROCÉDÉ ET SYSTÈME DE MOULE POUR MOULAGE EN FILET D'UNE STRUCTURE INTÉGRÉE CO-DURCIE

(43) Date of publication of application: 24.12.2014
(73) Proprietor: SAAB AB, 581 88 Linköping (SE)
(72) Inventor: JOHANSSON, Peter, S-582 44 Linköping (SE); SCHULTZ, Sverker, S-597 94 Åtvidaberg (SE)
(74) Representative: Zacco Sweden AB
(86) International application number: PCT/SE2012/050179
(87) International publication number: WO 2013/122524

(56) References cited:
- EP-A1- 0 582 160
- EP-A1- 1 400 341
- EP-A2- 0 749 825
- WO-A1-89/03293
- WO-A1-2009/007873
- WO-A1-2012/007780
- WO-A1-2012/104084
- WO-A2-2008/020158
- WO-A2-2008/020158
- DE-A1- 3 418 110
- DE-A1- 3 739 753
- US-A- 4 492 607
- US-A- 5 152 860
- US-A1- 2003 192 990
- US-A1- 2006 060 705
- US-A1- 2006 060 705
- US-A1- 2006 249 626
- US-A1- 2009 283 638
- US-A1- 2009 320 398
- US-A1- 2010 124 659
- US-A1- 2011 168 324
- US-B1- 6 190 484

## Description

### TECHNICAL FIELD

The present invention relates to a mould system and a method for net moulding of a co-cured integrated structure comprising a skin provided with stringers and rib feet. The structure can e.g. be used in the fuselage of aircrafts or in boats.

### BACKGROUND ART

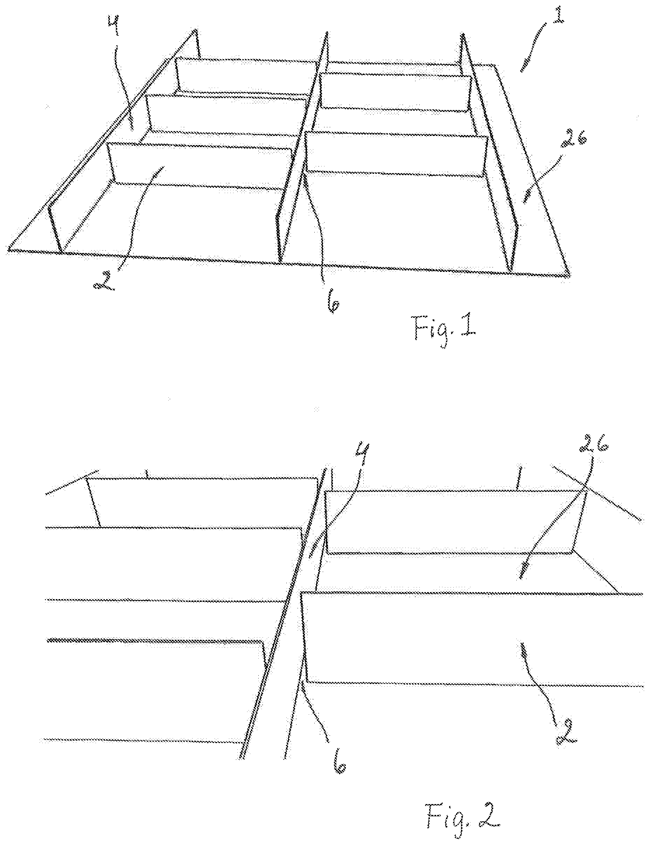

When manufacturing integrated composite structures, such as skins reinforced by rib feet also called "shear ties" and stringers see fig. 1, the rib feet can either be connected or not connected with a composite layer against the stringers.

If the rib foot is not connected with the stringer, it is desirable to have a gap between the rib foot and the stringer in order to minimize the stress concentration in that area. It is known today to manufacture aircraft skin structures with a gap between the rib feet and the stringer.

The structures can e.g. be made of carbon-fibre-reinforced polymer or carbon-fibre-reinforced plastic (CFRP or CRP or often simply carbon fibre). CFRP or CRP is a very strong and light fibre-reinforced polymer which contains carbon fibres. The polymer is most often epoxy, but other polymers, such as phenolic and Bismaleimide are sometimes used.

In the known fabrication process prepregs are used to create the skin, the stringers and the rib feet. Prepreg is the shortened name used as a reference to composite fabrics that have been **pre**-im**preg**nated with thermosetting resin but not yet permanently cured. These usually take the form of thin sheets consisting of a combination of a matrix (or resin) and fibre reinforcement. The fibres can have one direction (unidirectional reinforcement) or several directions (fabric reinforcement). If the fibres are unidirectional the solid structure is obtained by placing a number of prepregs on top of each other, with varying fibre direction. The role of the matrix is to support the fibres and bond them together in the composite material. It also keeps the fibres in their position and chosen orientation. The prepregs are mostly stored in cooled areas since activation is most commonly done by heat.

A structure part is created in two steps, lay-up processing and autoclave processing. In the lay-up process the structure is formed. This is done by applying a number of prepregs, resulting in a stack of prepreg, on a mould. A vacuum bag is placed and sealed over the prepregs and the mould and all air under the bag is evacuated. In the autoclave process the mould covered with the stack of prepreg and the vacuum bag is put into and treated in an autoclave. An autoclave is a pressure vessel which provides the curing conditions for the composite where the application of vacuum, pressure, heat up rate and cure temperature is controlled. In the autoclave a vacuum is still maintained under the vacuum bag, and a heat and a high pressure is applied to the composite structure.

In the existing fabrication process of aircraft structures, the skin, the stringers and the rib feet are formed and cured separately. The cured stringers and rib feet are bonded to the skin and trimmed to get the desired form comprising the gap between the stringers and the rib feet.

The problem with the solution according to the prior art is that the trimming and bonding operation is time consuming. There is thus a need for a faster and more efficient way of manufacturing the reinforced structures with a gap between the stringers and the rib feet.

### DEFINITIONS

It shall be noted that through this application "longitudinal" refers to the direction being parallel to the stringers and "transversal" refers to the direction being parallel to the rib feet. The stringers are defined as the longitudinal reinforcements and the rib feet are defined as the transversal reinforcements of the structure.

### SUMMARY

The object of the present invention is to provide an inventive method for net moulding a structure for e.g. aircrafts, boats or other crafts comprising a skin provided with at least two stringers and at least one rib foot and a gap between the stringers and the at least one rib foot, where the previously mentioned problems are avoided. This object is achieved by mould system according to claim 1. The claim reveals a mould system for net moulding of a co-cured structure comprising a skin provided with at least two stringers and at least one rib foot and a gap between the stringers and the at least one rib foot.

The mould system comprises a substantially rectangular frame made of a low heat expanding material. The frame comprises a first longitudinal frame part, a second longitudinal frame part, a first transversal frame part and a second transversal frame part.

The mould also comprises at least one row unit wherein each row unit comprises a row of at least two substantially rectangular boxes made of a heat expanding material. Each box has a bottom, a first longitudinal side wall, a second longitudinal side wall, a first transversal side wall and a second transversal side wall. The at least two boxes in the row are positioned such that the first transversal side wall of a first box is facing the second transversal side wall of a second box.

The mould further comprises at least two connection plates connecting the at least two boxes in the row of boxes along the first longitudinal side walls and along the second longitudinal side walls by means of fastening means. Each connection plate is adapted to be positioned on the first longitudinal side walls or on the second longitudinal side walls of at least two adjacent boxes in the row, and each connection plate is adapted to be connected to each of the longitudinal side walls on which the connection plate is positioned. Each connection plate is also adapted to extend along at least a part of each of the first longitudinal side walls on which the connection plate is positioned.

A first longitudinal side of the at least one row unit is constituted by the first longitudinal side walls of the boxes in the row unit and by the connection plates being connected thereto and a second longitudinal side of the row unit is constituted by the second longitudinal side walls of the boxes in the row unit and of the connection plates being connected thereto. An external surface of the first longitudinal side walls of the boxes and of the second longitudinal side walls of the boxes and an external surface of the connection plates in the at least one row unit have a form such that the first longitudinal side and the second longitudinal side of the at least one row unit form flat surfaces.

The advantage with the mould system is that a whole structure can be formed and cured as one net moulded unit, which minimises the time for trimming of the structure, as will be described in the method.

Said object is further achieved by a mould system according to first and a second embodiment. This claim reveals a mould system wherein a flat surface of a longitudinal side of the at least one row unit may be obtained by at least one box in the row unit having a form such that an external surface of at least one of the corresponding longitudinal side walls of the box is flat.

The advantage with the mould system according to this embodiment is that the length of the connection plates is flexible and that one connection plate can connect two or more boxes to each other.

Said object is further achieved by a mould system according to a third embodiment. This claim reveals a mould system wherein a flat surface of a longitudinal side of the at least one row unit may be obtained by at least one box in the row unit having a form such that at least one of the corresponding longitudinal side walls of the box has a recess in at least one of its respective ends, wherein a depth of the recess is equal to a thickness of a connection plate.

The advantage with the mould system according to this embodiment is that the connection plates can have a specified length for connecting two boxes to each other regardless of the longitudinal length of the boxes.

Said object is further achieved by the mould system wherein the boxes are made of aluminium.

Said object is further achieved by the mould system wherein the frame is made of invar.

Said object is further achieved by the mould system wherein the boxes are provided with threaded holes for insertion of a tool for removal of the boxes.

Said object is further achieved by the mould system wherein the height of each connection plate is substantially equal to or higher than the height of the at least two boxes.

Said object is further achieved by a method for net moulding of a co-cured structure comprising a skin provided with at least two stringers and at least one rib foot and a gap between the stringers and the at least one rib foot. The method comprises the following steps:
∘ providing at least two substantially rectangular boxes made of a heat expanding material, wherein each box has a bottom, a first longitudinal side wall, a second longitudinal side wall, a first transversal side wall and a second transversal side wall,
∘ applying a first layer of prepregs onto an underside of the bottom and on an external side of at least one of the first transversal side wall and the second transversal side wall of each of the at least two rectangular boxes thereby obtaining at least two boxes having a bottom and at least one of the first transversal side wall and the second transversal side wall covered with a first layer of prepregs, ∘ forming at least one longitudinal row unit by, for each row unit
   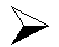 positioning at least two of said boxes covered with a first layer of prepregs next to each other, with a covered transversal side wall of a first box facing a covered transversal side wall of a second box, thereby obtaining a row of boxes,
   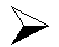 connecting the at least two boxes in the row of boxes along the first longitudinal side walls and along the second longitudinal side walls by means of at least two connection plates and fastening means,
   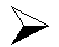 forming a first longitudinal side of the at least one row unit constituted by the first longitudinal side walls of the boxes in the row unit and of the connection plates being connected thereto, and forming a second longitudinal side of the row unit constituted by the second longitudinal side walls of the boxes in the row unit and of the connection plates being connected thereto,
      ▪ wherein an external surface of the first longitudinal side walls and of the second longitudinal side walls of the boxes and an external surface of the connection plates in the at least one row unit have a form such that an external surface of the first longitudinal sides and an external surface of the second longitudinal sides of the at least one row unit form flat surfaces,
   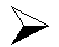 forming a bottom of the at least one row unit constituted by the bottom of the boxes in the row unit,
∘ applying a second layer of prepregs onto an external surface of the bottom and an external surface of the first longitudinal side and of the second longitudinal side of the at least one row unit, thereby obtaining at least one row unit having a bottom, the first longitudinal side and the second longitudinal side covered with a second layer of prepregs,
∘ forming of the skin by applying a third layer of prepregs onto a plate made of a low heat expanding material,
∘ positioning the at least one covered row unit on the skin,
   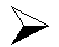 when more than one row unit, positioning a first row unit next to a second covered row unit with the first longitudinal side of the first row unit being positioned next to the second longitudinal side wall of the second row unit,
∘ providing a substantially rectangular frame made of a low heat expanding material, wherein the frame comprises a first longitudinal frame part, a second longitudinal frame part, a first transversal frame part and a second transversal frame part,
∘ positioning the frame on the skin, such that it surrounds the at least one covered row unit and such that the first longitudinal frame part is positioned next to a first longitudinal side of at least one covered row unit and that the second longitudinal frame part is positioned next to a second longitudinal side of at least one covered row unit, thereby obtaining a moulding assembly comprising the plate, the frame, the at least one row unit, and the different layers of prepregs,
∘ loosening of the fastening means,
∘ covering the moulding assembly with a vacuum bag for conventional curing,
∘ positioning the moulding assembly and the vacuum bag in an autoclave and exerting a pressure and applying a heat,
∘ removing the frame, the connection plates and the boxes.

Said object is further achieved by the method according wherein after the step of positioning the at least one covered row unit on the skin the method comprises the further step of:
∘ applying a fourth layer of prepregs onto an external surface of a bottom and on an inner side wall of the first longitudinal frame part and of the second longitudinal frame part.

### BRIEF DESCRIPTION OF THE DRAWINGS

The present invention will now be described in detail with reference to the figures, wherein:
- Figure 1.: Figure 1 shows an integrated structure with a gap between the stringers and the rib feet, created in accordance with the present invention;
- Figure 2.: Figure 2 shows an enlarged view of the gap between the stringers and the rib feet.
- Figure 3.: Figure 3A and 3B shows a side view of a number of boxes covered with a first layer of prepreg according to the invention.
- Figure 4.: Figure 4A and 4B shows a view seen from above of a number of boxes covered with a first layer of prepreg according to the invention.
- Figure 5.: Figure 5 shows a view seen from above of a row unit according to a first embodiment of the invention.
- Figure 6.: Figure 6 shows a cross section view of the row unit of figure 5 seen from the cut A, according to the invention.
- Figure 7.: Figure 7 shows a view seen from above of a row unit covered with a second layer according to a first embodiment of the invention.
- Figure 8.: Figure 8 shows a cross section view of the row unit of figure 7 seen from the cut B, according to the invention.
- Figure 9.: Figure 9 shows the mould system according to a first embodiment of the invention seen from above.
- Figure 10.: Figure 10 shows a cross section view of the mould system of figure 9 seen from the cut C, according to the invention.
- Figure 11.: Figure 11 shows a cross section view of the mould system of figure 9 seen from the cut D, according to the invention.
- Figure 12.: Figure 12 shows a view seen from above of a row unit according to a second embodiment of the invention.
- Figure 13.: Figures 13A and 13B show a view seen from above of a row unit according to a third embodiment of the invention.
- Figure 14.: Figure 14 shows a perspective view of the mould system with two row units.
- Figure 15.: Figure 15 shows a flowchart of the moulding method according to the present invention.

### DETAILED DESCRIPTION

Figure 1 shows an integrated structure 1 which is manufactured by using the mould system and the method of the present invention. The structure can be used in e.g. aircrafts but it can be used also in other applications such as e.g. boats or crafts. The structure comprises a skin 26. The skin 26 is reinforced with longitudinal stringers 4 and transversal rib feet 2, which projects from the skin 26. The stringers 4 are substantially perpendicular to the rib feet 2. The rib feet 2 and the stringers 4 are spaced from each other by a gap 6. This gap 6 makes the structure more flexible and prevents the structure 1 from breaking when exposed to high forces. Figure 2 shows an enlarged view of the gap 6 between the rib feet 2 and the stringers 4.

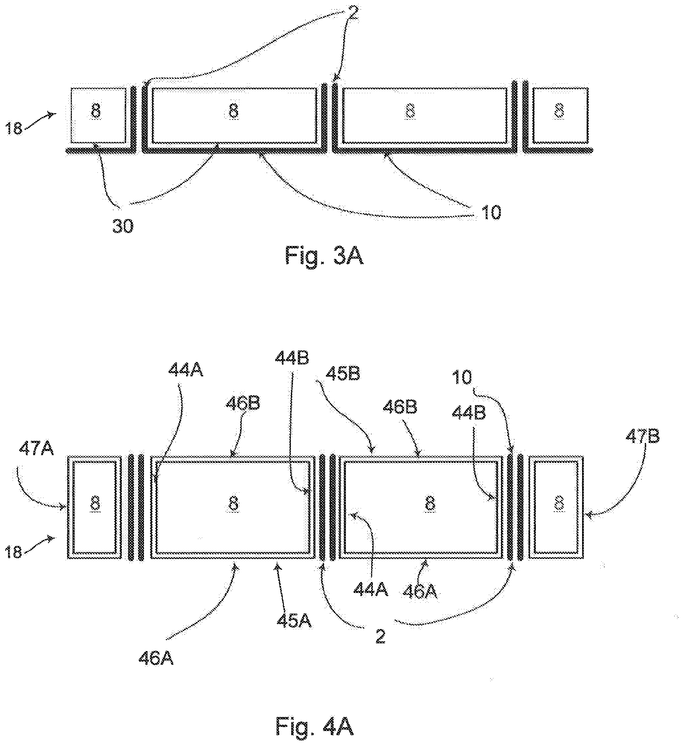

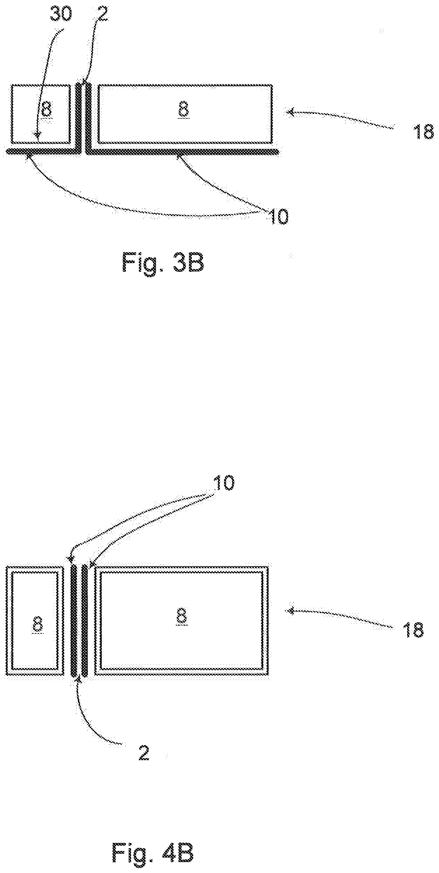

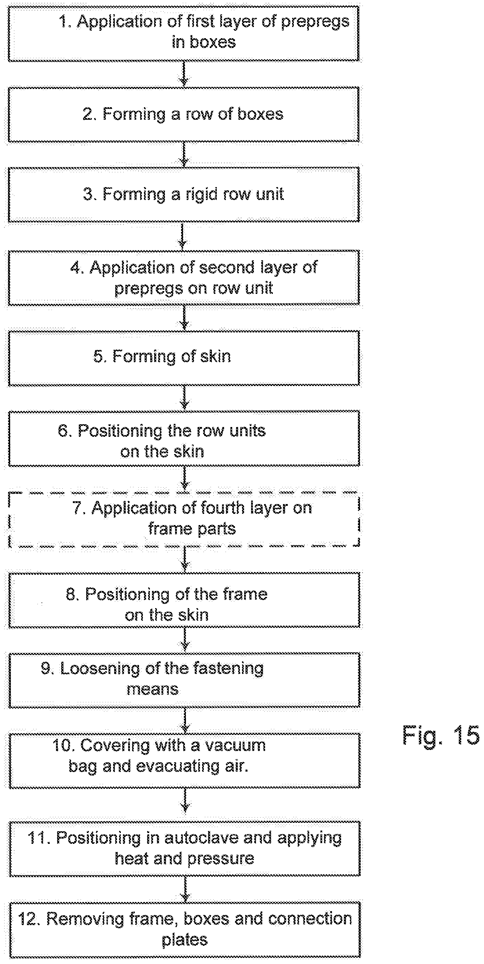

Figures 3 - 11 aim at describing the manufacturing method of the integrated structure 1 and the mould system that is used for the manufacturing method according to a first embodiment of the present invention. Figures 3 and 4 show the first step of creating the rib feet. This step is denoted by step 1 in figure 15. Figure 3A shows a side view of four boxes 8 and figure 4A shows the four boxes 8 from above. Figure 3B show a side view of two boxes 8 and figure 4A shows the two boxes 8 from above. The boxes 8 are hollow with the opening upwards. Each box 8 comprises a bottom 30 and four side walls, a first longitudinal side wall 46A, a second longitudinal side wall 46B, a first transversal side wall 44A and a second transversal side wall 44B. The boxes 8 are made of a heat expanding material, like e.g. aluminium or steel. A number of prepregs forming a first layer 10 is applied on the boxes. The first layer 10 is applied on the underside of the bottom 30 of the boxes 8 and on the external side of at least one of the transversal side walls 44A and 44B of the boxes 8, thereby forming boxes that have a prepreg covered bottom surface 30 and at least one prepreg covered transversal side wall 44A or 44B. In all figures a number of prepregs positioned one upon the other and forming a thick layer (stack of prepreg) is illustrated by a thick, black line. In all figures there is a small clearance between the boxes 8 and the layers. This clearance only serves for illustration purpose in order to make the figures clearer. There is no clearance in the actual embodiments of the invention.

The second step of the manufacturing method is to create at least one row 18 of boxes. This step is denoted by step 2 in figure 15. A row 18 of boxes 8 is formed by positioning a number of covered boxes 8 next to each other, just as in figures 3A, 3B, 4A and 4B, so that the covered transversal side wall 44A of a first box 8 and the covered transversal side wall 44B of a second box 8 are facing each other. The first layers 10 covering the first transversal side wall 44A of the first box and the second transversal side wall 44B of the second box 8 will later form one rib foot. The number of boxes 8 in one row 18 depends on the desired number of rib feet 2. Two boxes 8 are necessary in order to obtain one rib foot, three boxes 8 makes two rib feet and so on. (Compare figures 3A and 4A with figures 3B and 4B.) The row 18 of boxes 8 has two transversal sides 47A and 47B (constituted by the covered/non covered transversal side wall 44A of a first end box and the second covered/non covered transversal side wall 44B of a second end box of the row), a bottom 49 (constituted by the covered bottom 30 of the boxes in the row), and two longitudinal sides, a first longitudinal side 45A and a second longitudinal side 45B (constituted by the longitudinal side walls 46A and 46B of the boxes 8).

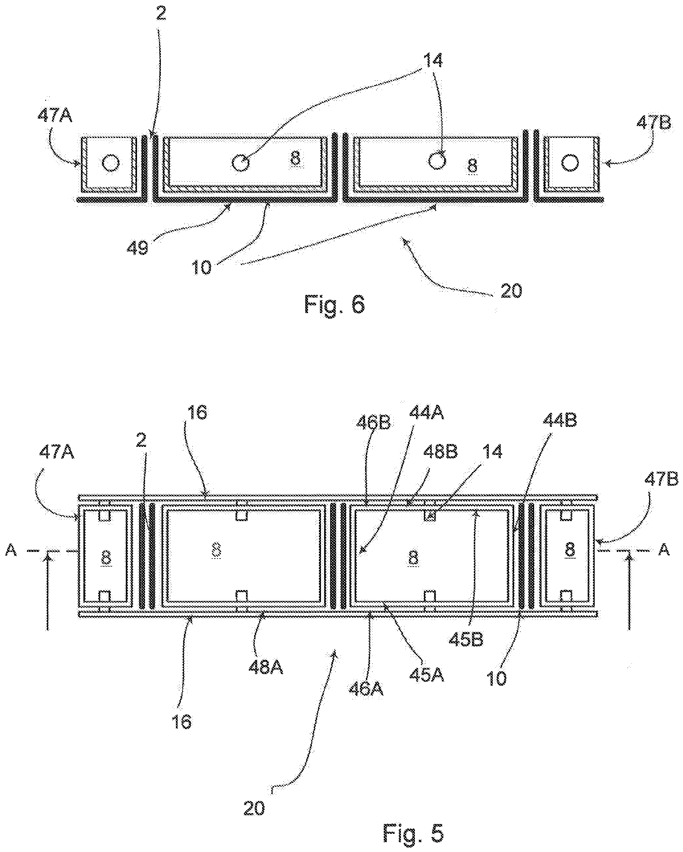

The third step is shown in figures 5 and 6. This step is denoted by step 3 in figure 15. The aim of this step is to connect the boxes to each other in order to obtain a rigid row unit 20. This is performed by positioning two long connection plates 16 in the form of straight rulers on each of the respective longitudinal sides 45A and 45B of the row and connects each connection plate 16 to each of the boxes 8 by means of fastening means 14. The fastening means14 can e.g. be screws or bolts. In addition to making a rigid row unit 20 the connection plates 16 create the gap 6 between the stringers 4 and the rib feet 2. Without the connection plates 16 the stringers 4 would abut against the rib feet 2. Therefore the connection plates 16 are very fundamental in the present invention. The row unit 20 has two transversal sides, a first transversal side 47A and a second transversal side 47B (the same sides as for the row of boxes), a bottom 49 (the same bottom as for the row of boxes), and two longitudinal sides, a first longitudinal side 48A and a second longitudinal side 48B. The first longitudinal side 48A of the row unit 20 is constituted by the first longitudinal side walls 46A of the boxes 8 and of the connection plate 16 connecting the boxes 8 along these longitudinal side walls 46A. The second longitudinal side 48B of the row unit 20 is constituted by the longitudinal side walls 46B of the boxes 8 and of the connection plate 16 connecting the boxes along these longitudinal side walls 46B.The connection plates 16 are made of a heat expanding material such as aluminium or steel. According to this embodiment the length of the connection plates 16 is substantially equal to the length of the row unit 20. The height of the connection plates 16 is substantially equal to the height of the boxes 8 and the thickness of the connection plates 16 is substantially equal to the width of the desired gap 6. The connection plates 16 in this embodiment are positioned on and cover each of the longitudinal sides 45A and 45B of the row 18 of boxes 8. They connect the boxes 8 to each other, and thereby create a rigid row unit 20. This has the advantage that several boxes 8 can be handled as one unit, which makes it easier to apply additional prepregs. Depending on the desired number of stringers 4 one or several rigid row units 20 can be created.

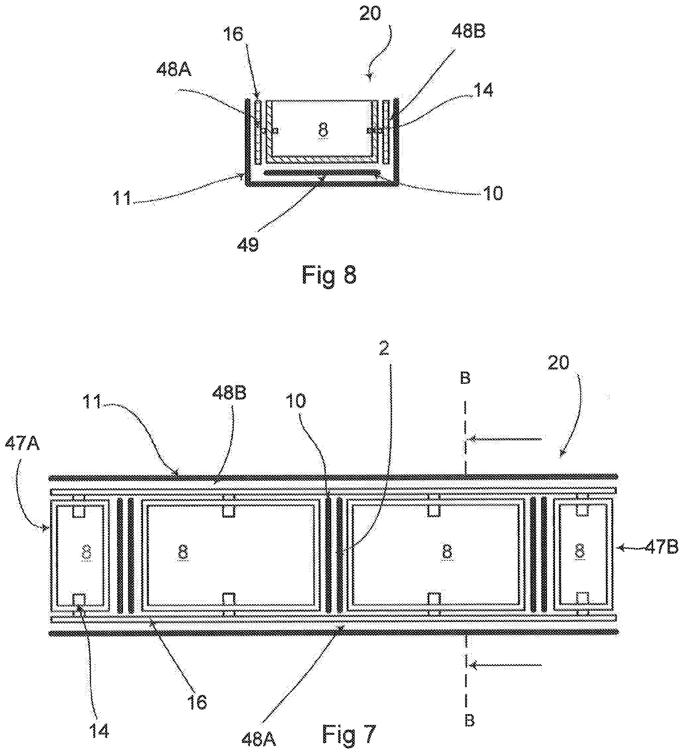

In the fourth step of the manufacturing method a second layer 11 of prepregs is applied on the rigid row units 20. This step is denoted by step 4 in figure 15. For each row unit 20 the second layer 11 is applied on the bottom 49 of the row unit 20 (onto the first layer 10 covering the bottom surface 30 of the boxes 8) and on the first and the second longitudinal sides 48A and 48B of the rigid row unit 20. Since the connection plates 16 are positioned on the longitudinal sides 48A and 48B of the row unit 20, this means that the second layer 11 is applied on the bottom 49 of the row unit 20 and on each of the connection plates 16. The result of this step is that the bottom 49 of the row unit 20 and the first and second longitudinal sides 48A and 48B of the row unit 20 are covered by prepregs. Figures 7-8 illustrate how this step is performed.

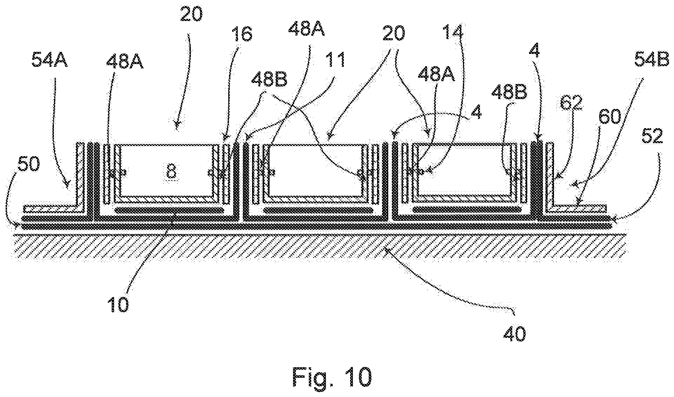

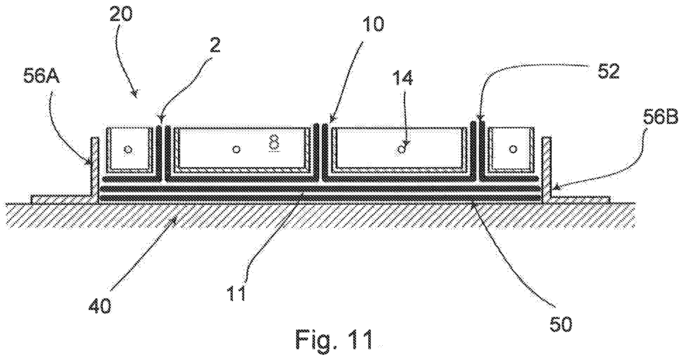

The fifths step in the manufacturing procedure is to create the skin 26. This step is denoted by step 5 in figure 15. The skin 26 is created by placing a number of prepregs on the surface of a plate 40 made of a low heat expanding material. The plate 40 can have a plain surface but the surface can also be curved. The form of the plate 40 depends on the desired form of the skin 26. The prepregs forms a third layer 50 constituting the skin 26. This third layer is shown in figures 10 and 11.

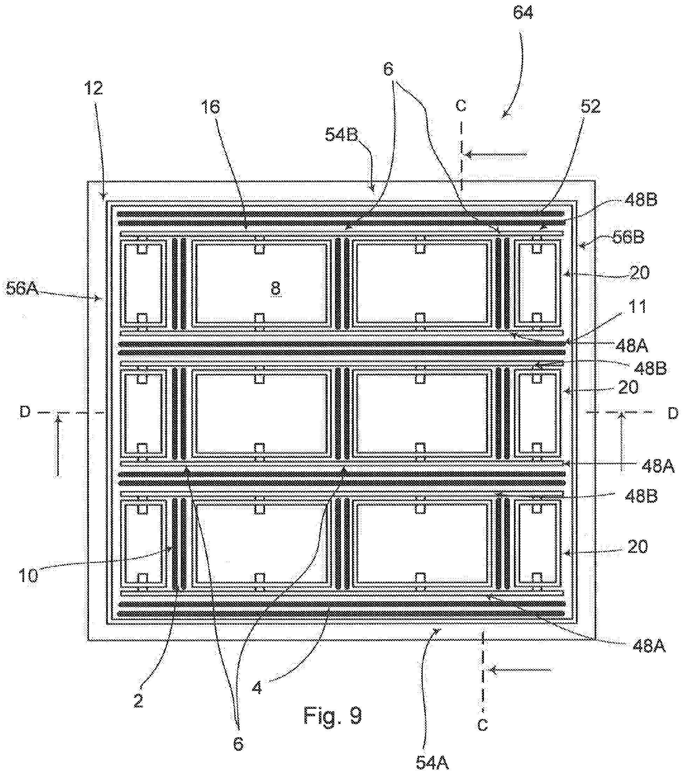

In the sixth step the rigid row units 20 covered with a second layer 11 are put onto the third layer 50 constituting the skin 26. This step is denoted by step 6 in figure 15. If there are several rigid row units 20, the rigid row units 20 are positioned on the third layer 50 such that the first longitudinal side 48A of a first row unit 20 is positioned next to the second longitudinal side 48B of a second row unit 20. This is illustrated in figure 9. The figure also illustrates how the gaps 6 are obtained by means of the connection plates 16.

In addition to the mentioned boxes 8, the connection plates 16 and the fastening means 14, the mould system comprises a substantially rectangular frame 12 made of a low heat expanding material. Figure 9 shows the frame 12, the rigid row units 20 and the two first layers 10 and 11 seen from above. The frame 12 comprises two longitudinal frame parts, a first longitudinal frame part 54A and a second longitudinal frame part 54B, a first transversal frame part 56A and a second transversal frame part 56B, wherein each frame part 54A, 54B, 56A and 56B have a bottom 60 and at least one side wall 62 (see figures 10 and 11). The at least one side wall 62 has approximately the same height as the longitudinal side walls 46A and 46B of the boxes 8 but it can also be higher than the longitudinal side walls 46A and 46B of the boxes 8. The frame 12 can either be made as one unit or it can comprise of several parts that are connected to each other to make one unit.

In step 7 a fourth layer 52 of prepregs is applied on the underside of the bottom 60 and on the inner side of the side wall 62 of at least one of the first longitudinal frame part 54A and the second longitudinal frame part 54B. This step is denoted by step 7 in figure 15. The result of the step is that the underside of the bottom 60 and the inner side of the side wall 62 of at least one of the longitudinal frame parts 54A and 54B are covered by prepregs. The step can be omitted, which is shown in figure 15 by the dotted lines. However, this leads to thinner end stringers 4.

In step 8 the frame 12 is positioned on the third layer 50 forming the skin. This step is denoted by step 8 in figure 15. The frame 12 surrounds the row units 20 so that the prepreg covered longitudinal frame part 54A is positioned next to the prepreg covered longitudinal side 48A of a first end row unit 20 and the prepreg covered longitudinal frame part 54B is positioned next to the prepreg covered longitudinal side 48B of a second end row unit 20.

Figure 10 shows a cross section view seen from a cut C and figure 11 shows a cross section view seen from a cut D in figure 9. As seen from figure 10, the stringers 4 are formed by the second layer 11 covering a longitudinal side 48A of a first row unit 20 and by the second layer 11 covering a longitudinal side 48B of second row unit 20 being positioned next to the first row unit 20. Alternatively the stringers 4 are formed by the second layer 11 of one end row unit 20 and the fourth layer 52 on the inner side of the side wall 62 of a longitudinal frame part 54A or 54B. It is important that the external surfaces of the longitudinal sides 48A and 48B of the row units 20 is flat. If not, the stringers 4 will not be straight.

Before covering the now prepared moulding assembly 64, i.e. the frame 12, the plate 40, the row units 20 and the layers 10, 11, 50, 52 of prepregs, with a vacuum bag and placing the moulding assembly in an autoclave for curing of the structure, the fastening means 14 are loosened. The reason for this is that the heat expanding boxes 8 shall be able to move and float freely within the rigid frame 12 during the hardening process. In this way the different layers 11 and 12 and 50 and 52 are forced towards the rigid frame 12 by the expansion of the heat expanding boxes 8 and the heat expanding connection plates 16, and remaining air between the prepregs can be pressed out, making the structure 1 solid and hard. These steps are denoted by steps 9-11 in figure 15.

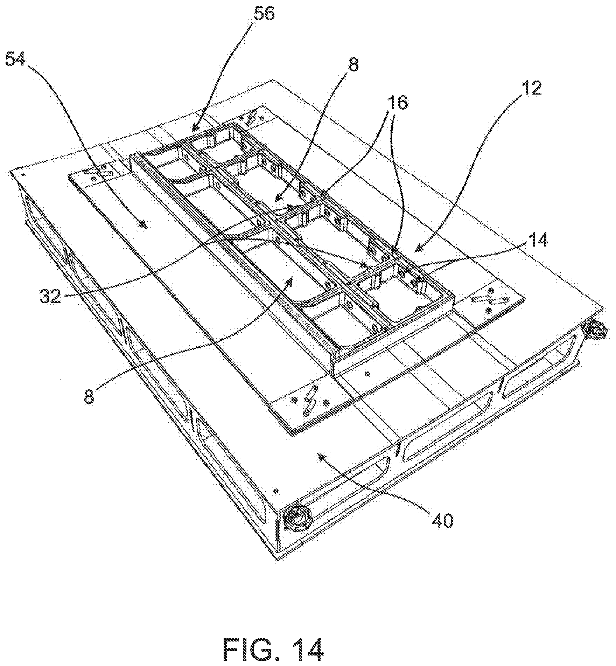

The last step is to remove the frame 12, the connection plates 16 and the boxes 8. The frame 12 can be removed easily but the connection plates 16 and the boxes 8 are more difficult to remove. Due to their expansion in the autoclave they are now pressed towards the carbon-fibre structure 1. In order to facilitate the removal, the boxes 8 can be provided with threaded holes 32 shown in figure 14 for insertion of a tool for removal of the boxes 8.

According to the first embodiment the connection plates 16 are in the form of rulers and their length is substantially equal to the length of the row units 20.

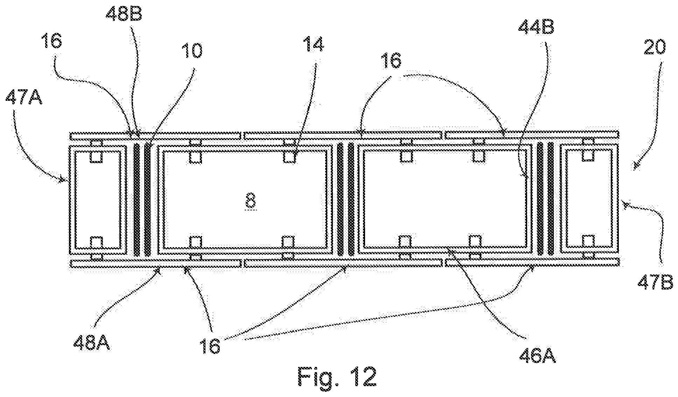

According to a second embodiment the connection plates 16 are designed as shorter rulers and a single connection plate 16 does not cover the entire longitudinal side 48A and 48B of a row unit 20. This has the advantage that the connection plates 16 are more flexible. Instead of positioning a connection plate 16 on each longitudinal side 45A and 45B of a row of boxes 8 as in the first embodiment and connect all boxes 8 in the row 18 of boxes 8 to the two connection plates 16, several connection plates 16 connect the boxes 8 in a row of boxes 8 along the respective longitudinal sides 45A and 45B. Each connection plate 16 is adapted to connect one of the respective longitudinal sides 45A, 45B of two or more boxes 8 in a row 18 of boxes 8, but not necessarily of all boxes 8 in the row 18. This embodiment is shown in figure 12. As can be seen in the figure six connection elements 16 are used for fixing four boxes 8 to each other in one row unit 20. Three connection elements 16 have the total length which is substantially equal to the length of the row unit 20. According to this embodiment the four boxes 8 in figure 12 could also have been connected by e.g. four connection elements 16, where two connection elements 16 connect three adjacent boxes 8 to each other on each of the longitudinal side 45A and 45B of the row 18 of boxes 8, and two connection elements 16 connect said three boxes 8 to the fourth box 8 on each longitudinal side 45A and 45B of the row 18 of boxes 8. In figure 12 there is a clearance between the connection plates 16. This clearance is only for illustration. In the invention the connection plates 16 abut against each other.

Just as in the first embodiment the row unit 20 has two transversal sides, a first transversal side 47A and a second transversal side 47B (the same sides as for the row of boxes), a bottom (the same bottom as for the row of boxes), and two longitudinal sides 48A and 48B. The longitudinal sides 48A and 48B of the row unit 20 are, just like in the first embodiment, constituted by the connection plates 16 and the longitudinal side walls 46A and 46B of the boxes 8.

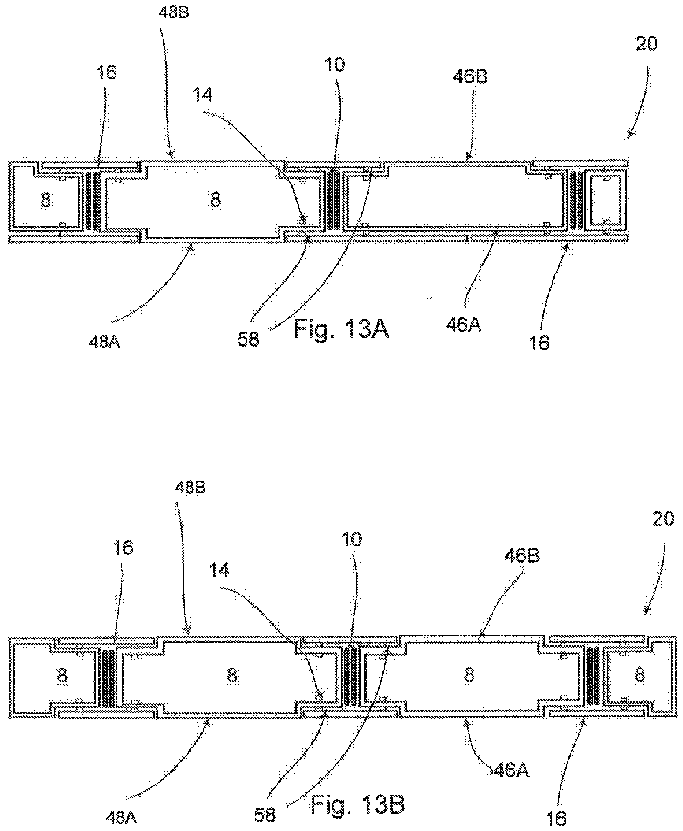

According to a further embodiment each connection plate 16 only connects two adjacent boxes 8 to each other. Each of the boxes 8 in a row unit 20 has a recess 58 in the ends of at least one of the first and second longitudinal side walls 46A and 46B. Each recess 58 is adapted to receive a part of a connection plate 16. The recesses can be seen in figure 13B. A perspective view if the mould system according to this embodiment is shown in figure 14. As mentioned before it is important that the external surfaces of the longitudinal sides 48A and 48B of the row units 20 is flat. If not, the stringers 4 will not be straight. By making the depth of the recesses 58 equal to the thickness of the connection plates 16 the external surface of the connection plates 16 aligns with the external surface of the boxes 8 when the connection plates 16 are connected to the boxes 8.

The invention is not limited to the described embodiments. The embodiments can be combined and/or further developed without limiting the scope of the invention. The number of boxes 8 in a row unit can be varied according to the desired number of rib feet 2. The number of row units 20 can be varied according to the desired number of stringers. The three embodiments can be combined so that each row unit 20 can be provided with connection plates 16 according to one embodiment on one longitudinal side 48A and according to another embodiment on the other longitudinal side 48B. The embodiments can even be combined within one longitudinal side 48A or 48B as seen in figure 13A.

The invention is not limited to the specific flowchart presented, but includes all variations within the scope of the present claims. The internal sequence of steps for arriving at the structure can of course be varied according to the situation.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. A mould system for net moulding of a co-cured structure comprising a skin (26) provided with at least two stringers (4) and at least one rib foot (2) and a gap (6) between the stringers (4) and the at least one rib foot (2), the mould system comprising:
∘ a substantially rectangular frame (12) made of a low heat expanding material, the frame (12) comprising a first longitudinal frame part (54A), a second longitudinal frame part (54B), a first transversal frame part (56A) and a second transversal frame part (56B)
∘ at least one row unit (20), wherein each row unit (20) comprises
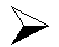 a row (18) of at least two substantially rectangular boxes (8) made of a heat expanding material,
▪ wherein each box (8) has a bottom (30), a first longitudinal side wall (46A), a second longitudinal side wall (46B), a first transversal side wall (44A) and a second transversal side wall (44B), and
▪ wherein the at least two boxes (8) in the row (18) are positioned such that the first transversal side wall (44A) of a first box is facing the second transversal side wall (44B) of a second box,
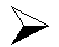 at least two connection plates (16) connecting the at least two boxes (8) in the row (18) of boxes (8) along the first longitudinal side walls (46A) and along the second longitudinal side walls (46B) by means of fastening means (14),
▪ wherein each connection plate (16) is adapted to be positioned on the first longitudinal side walls (46A) or on the second longitudinal side walls (46B) of at least two adjacent boxes (8) in the row (18), and
▪ wherein each connection plate (16) is adapted to be connected to each of the longitudinal side walls (46A; 46B) on which the connection plate (16) is positioned, and
▪ wherein each connection plate (16) is adapted to extend along at least a part of each of the first longitudinal side walls (46A) or (46B) on which the connection plate (16) is positioned,
▪ wherein each connection plate (16) creates the gap (6) between the stringers (4) and the rib feet (6),
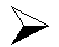 wherein a first longitudinal side (48A) of the at least one row unit (20) is constituted by the first longitudinal side walls (46A) of the boxes (8) in the row unit (20) and by the connection plates (16) being connected thereto and a second longitudinal side (48B) of the row unit (20) is constituted by the second longitudinal side walls (46B) of the boxes (8) in the row unit (20) and of the connection plates (16) being connected thereto, and
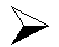 wherein an external surface of the first longitudinal side walls (46A) of the boxes (8) and of the second longitudinal side walls (46B) of the boxes (8) and an external surface of the connection plates (16) in the at least one row unit (20) have a form such that the first longitudinal side (48A) and the second longitudinal side (48B) of the at least one row unit (20) form flat surfaces.

2. The mould system of claim 1, wherein a flat surface of a longitudinal side (48A or 48B) of the at least one row unit (20) is obtained by at least one box (8) in the row unit (20) having a form such that an external surface of at least one of the corresponding longitudinal side walls (46A or 46B) of the box (8) is flat.

3. The mould system of claim 1, wherein a flat surface of a longitudinal side (48A or 48B) of the at least one row unit (20) is obtained by at least one box (8) in the row unit (20) having a form such that at least one of the corresponding longitudinal side walls (46A or 46B) of the box (8) has a recess (58) in at least one of its respective ends, wherein a depth of the recess (58) is equal to a thickness of a connection plate (16).

4. The mould system according to any of the claims 1-3, wherein the boxes (8) are made of aluminium.

5. The mould system according to any of the claims 1-4, wherein the frame (12) is made of invar.

6. The mould system according to any of the claims 1-5, wherein the boxes (8) are provided with threaded holes (32) for insertion of a tool for removal of the boxes (8).

7. The mould system according to any of the claims 1-6 wherein the height of each connection plate (16) is substantially equal to or higher than the height of the longitudinal side walls (46 A, 46B) of the at least two boxes (8).

8. Method for net moulding of a co-cured structure (1) comprising a skin (26) provided with at least two stringers (4) and at least one rib foot (2) and a gap (6) between the stringers (4) and the at least one rib foot (2), the method comprising the following steps:
∘ providing at least two substantially rectangular boxes (8) made of a heat expanding material, wherein each box (8) has a bottom (30), a first longitudinal side wall (46A) a second longitudinal side wall (46B), a first transversal side wall (44A) and a second transversal side wall (44B),
∘ applying a first layer (10) of prepregs onto an underside of the bottom (30) and on an external side of at least one of the first transversal side wall (44A) and the second transversal side wall (44B) of each of the at least two rectangular boxes (8), thereby obtaining at least two boxes (8) having a bottom (30) and at least one of the first transversal side wall (44A) and the second transversal side wall (44B) covered with a first layer (10) of prepregs,
∘ forming at least one longitudinal row unit (20) by, for each row unit (20)
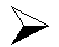 positioning at least two of said boxes (8) covered with a first layer (10) of prepregs next to each other, with a covered transversal side wall (44A) of a first box facing a covered transversal side wall (44B) of a second box, thereby obtaining a row (18) of boxes (8),
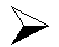 connecting the at least two boxes (8) in the row (18) of boxes (8) along the first longitudinal side walls (46A) and along the second longitudinal side walls (46B) by means of at least two connection plates (16) and fastening means (14), wherein each connection plate (16) creates the gap (6) between the stringers (4) and the rib feet (6),
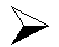 forming a first longitudinal side (48A) of the at least one row unit (20) constituted by the first longitudinal side walls (46A) of the boxes (8) in the row unit (20) and of the connection plates (16) being connected thereto, and forming a second longitudinal side (48B) of the row unit (20) constituted by the second longitudinal side walls (46B) of the boxes (8) in the row unit (20) and of the connection plates (16) being connected thereto,
▪ wherein an external surface of the first longitudinal side walls (46A) and of the second longitudinal side walls (46B) of the boxes (8) and an external surface of the connection plates (16) in the at least one row unit (20) have a form such that an external surface of the first longitudinal sides (48A) and an external surface of the second longitudinal sides (48B) of the at least one row unit (20) form flat surfaces,
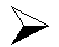 forming a bottom (49) of the at least one row unit (20) constituted by the bottom (30) of the boxes (8) in the row unit (20),
∘ applying a second layer (11) of prepregs onto an external surface of the bottom (49) and an external surface of the first longitudinal side (48A) and of the second longitudinal side (48B) of the at least one row unit (20), thereby obtaining at least one row unit (20) having a bottom (49), the first longitudinal side (48A) and the second longitudinal side (48B) covered with a second layer (11) of prepregs,
∘ forming of the skin (26) by applying a third layer (50) of prepregs onto a plate (40) made of a low heat expanding material,
∘ positioning the at least one covered row unit (20) on the skin (26),
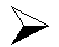 when more than one row unit (20), positioning a first row unit (20) next to a second covered row unit (20) with the first longitudinal side (48A) of the first row unit (20) being positioned next to the second longitudinal side wall (48B) of the second row unit (20),
∘ providing a substantially rectangular frame (12) made of a low heat expanding material, wherein the frame comprises a first longitudinal frame part (54A), a second longitudinal frame part, (54B), a first transversal frame part (56A) and a second transversal frame part (56B),
∘ positioning the frame (12) on the skin (26), such that it surrounds the at least one covered row unit (20) and such that the first longitudinal frame part (54A) is positioned next to a first longitudinal side (48A) of at least one covered row unit (20) and that the second longitudinal frame part (54B) is positioned next to a second longitudinal side (48B) of at least one covered row unit (20), thereby obtaining a moulding assembly (64) comprising the plate (40), the frame (12), the at least one row unit (20), and the different layers (10; 11; 50) of prepregs,
∘ loosening of the fastening means (14),
∘ covering the moulding assembly (64) with a vacuum bag for conventional curing,
∘ positioning the moulding assembly (64) and the vacuum bag in an autoclave and exerting a pressure and applying a heat,
∘ removing the frame (12), the connection plates (16) and the boxes (8).

9. The method according to claim 8, wherein after the step of positioning the at least one covered row unit (20) on the skin (26) the method comprises the further step of:
∘ applying a fourth layer (52) of prepregs onto an external surface of a bottom (60) and on an inner side wall (62) of the first longitudinal frame part (54A) and of the second longitudinal frame part (54B).

## Patentansprüche

1. Form-System zum Netz-Formen einer nass-in-nass-verklebten (co-cured) Struktur, die eine Haut (26) umfasst, die mit wenigstens zwei Stringern (4) und wenigstens einem Rippenfuß (2) sowie einem Zwischenraum (6) zwischen den Stringern (4) und dem wenigstens einen Rippenfuß (2) versehen ist, wobei das Form-System umfasst:
einen im Wesentlichen rechteckigen Rahmen (12), der aus einem Material mit geringer Wärmeausdehnung besteht, wobei der Rahmen (12) einen ersten Längs-Rahmenteil (54A), einen zweiten Längs-Rahmenteil (54B), einen ersten Quer-Rahmenteil (56A) und einen zweiten Quer-Rahmenteil (56B) umfasst,
wenigstens eine Reihen-Einheit (20), wobei jede Reihen-Einheit (20) umfasst:
eine Reihe (18) aus wenigstens zwei im Wesentlichen rechteckigen Kästen (8), die aus einem Wärmeausdehnungs-Material bestehen,
wobei jeder Kasten (8) einen Boden (30), eine erste Längsseiten-Wand (46A), eine zweite Längsseiten-Wand (46B), eine erste Querseiten-Wand (44A) und eine zweite Querseiten-Wand (44B) hat, und
wobei die wenigstens zwei Kästen (8) in der Reihe (18) so positioniert sind, dass die erste Querseiten-Wand (44A) eines ersten Kastens der zweiten Querseiten-Wand (44B) eines zweiten Kastens zugewandt ist,
wenigstens zwei Verbindungsplatten (16), die die wenigstens zwei Kästen (8) in der Reihe (18) von Kästen (8) entlang der ersten Längsseiten-Wände (46A) und entlang der zweiten Längsseiten-Wände (46B) mittels Befestigungseinrichtungen (14) verbinden,
wobei jede Verbindungsplatte (16) so eingerichtet ist, dass sie an den ersten Längsseiten-Wänden (46A) oder an den zweiten Längsseiten-Wänden (46B) von wenigstens zwei benachbarten Kästen (8) in der Reihe (18) positioniert ist,
jede Verbindungsplatte (16) so eingerichtet ist, dass sie mit jeder der Längsseiten-Wände (46A; 46B) verbunden ist, an der die Verbindungsplatte (16) positioniert ist,
jede Verbindungsplatte (16) so eingerichtet ist, dass sie sich an wenigstens einem Teil jeder der ersten Längsseiten-Wände (46A) oder (46B) entlang erstreckt, an der die Verbindungsplatte (16) positioniert ist,
und jede Verbindungsplatte (16) den Zwischenraum (6) zwischen den Stringern (4) und den Rippenfüßen (6) erzeugt,
wobei eine erste Längsseite (48A) der wenigstens einen Reihen-Einheit (20) durch die ersten Längsseiten-Wände (46A) der Kästen (8) in der Reihen-Einheit (20) und durch die damit verbundenen Verbindungsplatten (16) gebildet wird und eine zweite Längsseite (48B) der Reihen-Einheit (20) durch die zweiten Längsseiten-Wände (46B) der Kästen (8) in der Reihen-Einheit (20) sowie die damit verbundenen Verbindungsplatten (16) gebildet wird, und
eine Außenfläche der ersten Längsseiten-Wände (46A) der Kästen (8) und der zweiten Längsseiten-Wände (46B) der Kästen (8) sowie eine Außenfläche der Verbindungsplatten (16) in der wenigstens einen Reihen-Einheit (20) eine Form haben, bei der die erste Längsseite (48A) und die zweite Längsseite (48B) der wenigstens einen Reihen-Einheit (20) plane Flächen bilden.

2. Form-System nach Anspruch 1, wobei eine plane Fläche einer Längsseite (48A oder 48B) der wenigstens einen Reihen-Einheit (20) dadurch entsteht, dass wenigstens ein Kasten (8) in der Reihen-Einheit (20) eine Form hat, bei der eine Außenfläche wenigstens einer der entsprechenden Längsseiten-Wände (46A oder 46B) des Kastens (8) plan ist.

3. Form-System nach Anspruch 1, wobei eine plane Fläche einer Längsseite (48A oder 48B) der wenigstens einen Reihen-Einheit (20) dadurch entsteht, dass wenigstens ein Kasten (8) in der Reihen-Einheit (20) eine Form hat, bei der wenigstens eine der entsprechenden Längsseiten-Wände (46A oder 46B) des Kastens (8) eine Vertiefung (48) in wenigstens einem ihre entsprechenden Enden hat, wobei eine Tiefe der Vertiefungen (58) einer Dicke einer Verbindungsplatte (16) gleich ist.

4. Form-System nach einem der Ansprüche 1-3, wobei die Kästen (8) aus Aluminium bestehen.

5. Form-System nach einem der Ansprüche 1-4, wobei der Rahmen (12) aus Invar besteht.

6. Form-System nach einem der Ansprüche 1-5, wobei die Kästen (8) mit Gewindelöchern (32) zum Einführen eines Werkzeugs zur Entfernung der Kästen (8) versehen sind.

7. Form-System nach einem der Ansprüche 1-6, wobei die Höhe jeder Verbindungsplatte (16) im Wesentlichen genauso hoch ist wie oder höher als die Höhe der Längsseiten-Wände (46A, 46B) der wenigstens zwei Kästen (8).

8. Verfahren zum Netz-Formen einer nass-in-nass-verklebten (co-cured) Struktur, die eine Haut (26) umfasst, die mit wenigstens zwei Stringern (4) und wenigstens einem Rippenfuß (2) sowie einem Zwischenraum (6) zwischen den Stringern (4) und dem wenigstens einen dritten Fuß (2) versehen ist, wobei das Verfahren die folgenden Schritte umfasst:
Bereitstellen von wenigstens zwei im Wesentlichen rechteckigen Kästen (8), die aus einem Wärmeausdehnungs-Material bestehen, wobei jeder Kasten (8) einen Boden (30), eine erste Längsseiten-Wand (46A), eine zweite Längsseiten-Wand (46B) eine erste Querseiten-Wand (44A) und eine zweite Querseiten-Wand (44B) hat,
Aufbringen einer ersten Schicht (10) aus Prepregs auf eine Unterseite des Bodens (30) und auf eine Außenseite der ersten Querseiten-Wand (44A) oder/und der zweiten Querseiten-Wand (44B) jedes der wenigstens zwei rechteckigen Kästen (8), um so wenigstens zwei Kästen (8) zu schaffen, bei denen ein Boden (30) und die erste Querseiten-Wand (44A) oder/und die zweite Querseiten-Wand (44B) mit einer ersten Schicht (10) von Prepregs bedeckt ist,
Ausbilden wenigstens einer Längs-Reihen-Einheit (20), indem für jede Reihen-Einheit (20)
wenigstens zwei der mit einer ersten Schicht (10) von Prepregs bedeckten Kästen (8) nebeneinander positioniert werden, wobei eine bedeckte Querseiten-Wand (44A) eines ersten Kastens einer bedeckten Querseiten-Wand (44B) eines zweiten Kastens zugewandt ist und so eine Reihe (18) von Kästen (8) geschaffen wird,
die wenigstens zwei Kästen (8) in der Reihe (18) von Kästen (8) entlang der ersten Längsseiten-Wände (46A) und entlang der zweiten Längsseiten-Wände (46B) mittels wenigstens zweier Verbindungsplatten (16) und Befestigungseinrichtungen (14) verbunden werden, wobei jede Verbindungsplatte (16) den Zwischenraum (6) zwischen den Stringern (4) und den Rippenfüßen (6) schafft,
eine erste Längsseite (48A) der wenigstens einen Reihen-Einheit (20) ausgebildet wird, die durch die ersten Längsseiten-Wände (46A) der Kästen (8) in der Reihen-Einheit (20) und durch die damit verbundenen Verbindungsplatten (16) gebildet wird, und eine zweite Längsseite (48B) der Reihen-Einheit (20) ausgebildet wird, die durch die zweiten Längsseiten-Wände (46B) der Kästen (8) in der Reihen-Einheit (20) sowie die damit verbundenen Verbindungsplatten (16) gebildet wird,
wobei eine Außenfläche der ersten Längsseiten-Wände (46A) und der zweiten Längsseiten-Wände (46B) der Kästen (8) sowie eine Außenfläche der Verbindungsplatten (16) in der wenigstens einen Reihen-Einheit (20) eine Form haben, bei der eine Außenfläche der erste Längsseiten (48A) und eine Außenfläche der zweiten Längsseiten (48B) der wenigstens einen Reihen-Einheit (20) plane Flächen bilden,
ein Boden (49) der wenigstens einen Reihen-Einheit (20) ausgebildet wird, die durch den Boden (30) der Kästen (8) in der Reihen-Einheit (20) gebildet wird,
Aufbringen einer zweiten Schicht (11) aus Prepregs auf eine Außenfläche des Bodens Bilder und eine Außenfläche der ersten Längsseite (48A) sowie der zweiten Längsseite (48B) der wenigstens einen Reihen-Einheit (20), um so wenigstens eine Reihen-Einheit (20) zu schaffen, bei der ein Boden (49), die erste Längsseite (48A) und die zweite Längsseite (48B) mit einer zweiten Schicht (11) von Prepregs bedeckt sind,
Ausbilden der Haut (26) durch Aufbringen einer dritten Schicht (50) aus Prepregs auf eine Platte (40), die aus einem Material mit geringer Wärmeausdehnung besteht,
Positionieren der wenigstens einen bedeckten Reihen-Einheit (20) auf der Haut (26), beim Vorhandensein von mehr als einer Reihen-Einheit (20) Positionieren einer ersten Reihen-Einheit (20) neben einer zweiten bedeckten Reihen-Einheit (20), wobei die erste Längsseite (48A) der ersten Reihen-Einheit (20) neben der zweiten Längsseiten-Wand (48B) der zweiten Reihen-Einheit (20) positioniert ist,
Bereitstellen eines im Wesentlichen rechteckigen Rahmens (12), der aus einem Material mit geringer Wärmeausdehnung besteht, wobei der Rahmen einen ersten Längs-Rahmenteil (54A), einen zweiten Längs-Rahmenteil (54B), einen ersten Quer-Rahmenteil (56A) und einen zweiten Quer-Rahmenteil (56B) umfasst,
Positionieren des Rahmens (12) auf der Haut (26), so dass er die wenigstens eine bedeckte Reihen-Einheit (20) umschließt und so, dass der erste Längs-Rahmenteil (54A) neben einer ersten Längsseite (48A) wenigstens einer bedeckten Reihen-Einheit (20) positioniert ist und dass der zweite Längs-Rahmenteil (54B) neben einer zweiten Längsseite (48B) wenigstens einer bedeckten Reihen-Einheit (20) positioniert ist, um so eine Form-Anordnung (64) zu schaffen, die die Platte (40), den Rahmen (12), die wenigstens eine Reihen-Einheit (20) und die verschiedenen Schichten (10; 11; 50) von Prepregs umfasst,
Lösen der Befestigungseinrichtungen (14),
Abdecken der Form-Anordnung (64) mit einem Vakuumbeutel zum herkömmlichen Verkleben (curing),
Positionieren der Form-Anordnung (64) sowie des Vakuumbeutels in einem Autoklaven und Ausüben eines Drucks sowie Einwirken von Wärme,
Entfernen des Rahmens (12), der Verbindungsplatten (16) und der Kästen (8).

9. Verfahren nach Anspruch 8, wobei das Verfahren nach dem Schritt des Positionierens der wenigstens einen bedeckten Reihen-Einheit (20) auf der Haut (26) den folgenden weiteren Schritt umfasst:
Aufbringen einer vierten Schicht (52) von Prepregs auf eine Außenfläche eines Bodens (60) und auf eine Innenseiten-Wand (62) des ersten Längs-Rahmenteils (54A) und des zweiten Längs-Rahmenteils (54B).

## Revendications

1. Système de moule pour moulage en filet d'une structure co-durcie comprenant un revêtement (26) muni d'au moins deux raidisseurs (4) et d'au moins une base de nervure (2) et un espace (6) entre les raidisseurs (4) et l'au moins une base de nervure (2), le système de moule comprenant :
un cadre sensiblement rectangulaire (12) réalisé en un matériau à dilatation thermique faible, le cadre (12) comprenant une première partie de cadre longitudinale (54A), une seconde partie de cadre longitudinale (54B), une première partie de cadre transversale (56A) et une seconde partie de cadre transversale (56B) ;
au moins une unité de rangée (20), dans lequel chaque unité de rangée (20) comprend :
une rangée (18) d'au moins deux boîtes sensiblement rectangulaires (8) réalisées en un matériau à dilatation thermique,
dans lequel chaque boîte (8) présente un fond (30), une première paroi latérale longitudinale (46A), une seconde paroi latérale longitudinale (46B), une première paroi latérale transversale (44A) et une seconde paroi latérale transversale (44B), et
dans lequel les au moins deux boîtes (8) dans la rangée (18) sont positionnées de telle sorte que la première paroi latérale transversale (44A) d'une première boîte fasse face à la seconde paroi latérale transversale (44B) d'une seconde boîte,
au moins deux plaques de connexion (16) qui connectent les au moins deux boîtes (8) dans la rangée (18) de boîtes (8) suivant les premières parois latérales longitudinales (46A) et suivant les secondes parois latérales longitudinales (46B) au moyen d'un moyen de fixation (14),
dans lequel chaque plaque de connexion (16) est adaptée de manière à être positionnée sur les premières parois latérales longitudinales (46A) ou sur les secondes parois latérales longitudinales (46B) d'au moins deux boîtes adjacentes (8) dans la rangée (18) ; et
dans lequel chaque plaque de connexion (16) est adaptée de manière à être connectée à chacune des parois latérales longitudinales (46A ; 46B) sur lesquelles la plaque de connexion (16) est positionnée ; et
dans lequel chaque plaque de connexion (16) est adaptée de manière à s'étendre suivant au moins une partie de chacune des premières parois latérales longitudinales (46A) ou (46B) sur lesquelles la plaque de connexion (16) est positionnée,
dans lequel chaque plaque de connexion (16) crée l'espace (6) entre les raidisseurs (4) et les bases de nervure (6), dans lequel :
un premier côté longitudinal (48A) de l'au moins une unité de rangée (20) est constitué par les premières parois latérales longitudinales (46A) des boîtes (8) dans l'unité de rangée (20) et par les plaques de connexion (16) qui leur sont connectées et un second côté longitudinal (48B) de l'unité de rangée (20) est constitué par les secondes parois latérales longitudinales (46B) des boîtes (8) dans l'unité de rangée (20) et par les plaques de connexion (16) qui leur sont connectées ; et
dans lequel une surface externe des premières parois latérales longitudinales (46A) des boîtes (8) et des secondes parois latérales longitudinales (46B) des boîtes (8) et une surface externe des plaques de connexion (16) dans l'au moins une unité de rangée (20) présentent une forme qui est telle que le premier côté longitudinal (48A) et le second côté longitudinal (48B) de l'au moins une unité de rangée (20) forment des surfaces planes.

2. Système de moule selon la revendication 1, dans lequel une surface plane d'un côté longitudinal (48A ou 48B) de l'au moins une unité de rangée (20) est obtenue par le fait qu'au moins une boîte (8) dans l'unité de rangée (20) présente une forme qui est telle qu'une surface externe d'au moins l'une des parois latérales longitudinales correspondantes (46A ou 46B) de la boîte (8) est plane.

3. Système de moule selon la revendication 1, dans lequel une surface plane d'un côté longitudinal (48A ou 48B) de l'au moins une unité de rangée (20) est obtenue par le fait qu'au moins une boîte (8) dans l'unité de rangée (20) présente une forme qui est telle qu'au moins l'une des parois latérales longitudinales correspondantes (46A ou 46B) de la boîte (8) comporte un évidement (58) dans au moins l'une de ses extrémités respectives, dans lequel une profondeur de l'évidement (58) est égale à une épaisseur d'une plaque de connexion (16).

4. Système de moule selon l'une quelconque des revendications 1-3, dans lequel les boîtes (8) sont réalisées en aluminium.

5. Système de moule selon l'une quelconque des revendications 1-4, dans lequel le cadre (12) est réalisé en invar.

6. Système de moule selon l'une quelconque des revendications 1-5, dans lequel les boîtes (8) sont munies de trous taraudés (32) pour l'insertion d'un outil pour l'enlèvement des boîtes (8).

7. Système de moule selon l'une quelconque des revendications 1-6, dans lequel la hauteur de chaque plaque de connexion (16) est sensiblement égale à la hauteur des parois latérales longitudinales (46A, 46B) des au moins deux boîtes (8) ou est plus importante que cette même hauteur.

8. Procédé de moulage en filet d'une structure co-durcie (1) comprenant un revêtement (26) muni d'au moins deux raidisseurs (4) et d'au moins une base de nervure (2) et un espace (6) entre les raidisseurs (4) et l'au moins une base de nervure (2), le procédé comprenant les étapes qui suivent :
constitution d'au moins deux boîtes sensiblement rectangulaires (8) réalisées en un matériau à dilatation thermique, dans lequel chaque boîte (8) présente un fond (30), une première paroi latérale longitudinale (46A), une seconde paroi latérale longitudinale (46B), une première paroi latérale transversale (44A) et une seconde paroi latérale transversale (44B) ;
application d'une première couche (10) de pré-imprégnés sur une face inférieure du fond (30) et sur un côté externe d'au moins une paroi prise parmi la première paroi latérale transversale (44A) et la seconde paroi latérale transversale (44B) de chacune des au moins deux boîtes rectangulaires (8), d'où ainsi l'obtention d'au moins deux boîtes (8) présentant un fond (30) et au moins une paroi prise parmi la première paroi latérale transversale (44A) et la seconde paroi latérale transversale (44B) recouverts d'une première couche (10) de pré-imprégnés ;
formation d'au moins une unité de rangée longitudinale (20) en, pour chaque unité de rangée (20) :
positionnant au moins deux desdites boîtes (8) recouvertes d'une première couche (10) de pré-imprégnés côte à côte, une paroi latérale transversale recouverte (44A) d'une première boîte faisant face à une paroi latérale transversale recouverte (44B) d'une seconde boîte, d'où ainsi l'obtention d'une rangée (18) de boîtes (8),
connectant des au moins deux boîtes (8) dans la rangée (18) de boîtes (8) suivant les premières parois latérales longitudinales (46A) et suivant les secondes parois latérales longitudinales (46B) au moyen d'au moins deux plaques de connexion (16) et d'un moyen de fixation (14), dans lequel chaque plaque de connexion (16) crée l'espace (6) entre les raidisseurs (4) et les bases de nervure (6),
formant un premier côté longitudinal (48A) de l'au moins une unité de rangée (20) constitué par les premières parois latérales longitudinales (46A) des boîtes (8) dans l'unité de rangée (20) et par les plaques de connexion (16) qui leur sont connectées, et en formant d'un second côté longitudinal (48B) de l'unité de rangée (20) constitué par les secondes parois latérales longitudinales (46B) des boîtes (8) dans l'unité de rangée (20) et par les plaques de connexion (16) qui leur sont connectées,
dans lequel une surface externe des premières parois latérales longitudinales (46A) et des secondes parois latérales longitudinales (46B) des boîtes (8) et une surface externe des plaques de connexion (16) dans l'au moins une unité de rangée (20) présentent une forme qui est telle qu'une surface externe des premiers côtés longitudinaux (48A) et une surface externe des seconds côtés longitudinaux (48B) de l'au moins une unité de rangée (20) forment des surfaces planes,
formant d'un fond (49) de l'au moins une unité de rangée (20) constitué par le fond (30) des boîtes (8) dans l'unité de rangée (20),
application d'une seconde couche (11) de pré-imprégnés sur une surface externe du fond (49) et sur une surface externe du premier côté longitudinal (48A) et du second côté longitudinal (48B) de l'au moins une unité de rangée (20), d'où ainsi l'obtention d'au moins une unité de rangée (20) comportant un fond (49), le premier côté longitudinal (48A) et le second côté longitudinal (48B) recouverts d'une seconde couche (11) de pré-imprégnés ;
formation du revêtement (26) en appliquant une troisième couche (50) de pré-imprégnés sur une plaque (40) réalisée en un matériau à dilatation thermique faible ;
positionnement de l'au moins une unité de rangée recouverte (20) sur le revêtement (26),
lorsqu'il y a plus d'une unité de rangée (20), positionnement d'une première unité de rangée (20) à côté d'une seconde unité de rangée recouverte (20), le premier côté longitudinal (48A) de la première unité de rangée (20) étant positionné à côté de la seconde paroi latérale longitudinale (48B) de la seconde unité de rangée (20),
constitution d'un cadre sensiblement rectangulaire (12) réalisé en un matériau à dilatation thermique faible, dans lequel le cadre comprend une première partie de cadre longitudinale (54A), une seconde partie de cadre longitudinale (54B), une première partie de cadre transversale (56A) et une seconde partie de cadre transversale (56B),
positionnement du cadre (12) sur le revêtement (26), de telle sorte qu'il entoure l'au moins une unité de rangée recouverte (20) et de telle sorte que la première partie de cadre longitudinale (54A) soit positionnée à côté d'un premier côté longitudinal (48A) d'au moins une unité de rangée recouverte (20) et que la seconde partie de cadre longitudinale (54B) soit positionnée à côté d'un second côté longitudinal (48B) d'au moins une unité de rangée recouverte (20), d'où ainsi l'obtention d'un ensemble de moulage (64) comprenant la plaque (40), le cadre (12), l'au moins une unité de rangée (20), et les différentes couches (10 ; 11 ; 50) de pré-imprégnés,
dévissage du moyen de fixation (14) ;
recouvrement de l'ensemble de moulage (64) à l'aide d'un sac sous vide pour un durcissement classique ;
positionnement de l'assemblage de moulage (64) et du sac sous vide dans un autoclave et exercice d'une pression et application de chaleur ;
enlèvement du cadre (12), des plaques de connexion (16) et des boîtes (8).

9. Procédé selon la revendication 8, dans lequel, après l'étape de positionnement de l'au moins une unité de rangée recouverte (20) sur le revêtement (26), le procédé comprend l'étape supplémentaire consistant à :
appliquer une quatrième couche (52) de pré-imprégnés sur une surface externe d'un fond (60) et sur une paroi latérale interne (62) de la première partie de cadre longitudinale (54A) et de la seconde partie de cadre longitudinale (54B).
